# EUROPÄISCHE PATENTSCHRIFT

(11) **EP 1 007 992 B1**
(45) Veröffentlichungstag und Bekanntmachung des Hinweises auf die Patenterteilung: **27.03.2002**
(21) Anmeldenummer: 98949909.0
(22) Anmeldetag: 11.08.1998
(51) Int. Cl.: G02B 3/08, G03B 21/132

(54) **OPTISCHE ANORDNUNG BESTEHEND AUS MINDESTENS ZWEI FRESNELLINSEN UND DEREN VERWENDUNG**
OPTICAL ARRANGEMENT CONSISTING OF AT LEAST TWO FRESNEL LENSES AND THE USE THEREOF
SYSTEME OPTIQUE CONSTITUE D'AU MOINS DEUX LENTILLES DE FRESNEL ET SON UTILISATION

(30) Priorität: 26.08.1997 DE 19737107
(43) Veröffentlichungstag der Anmeldung: 14.06.2000
(73) Patentinhaber: Fresnel Optics GmbH, 99510 Apolda (DE)
(72) Erfinder: HOFMANN, Werner, D-07747 Jena (DE)
(74) Vertreter: Pfenning, Meinig & Partner GbR
(86) Internationale Anmeldenummer: DE9802393
(87) Internationale Veröffentlichungsnummer: WO9910760

(56) Entgegenhaltungen:
- DE-A- 2 534 483
- GB-A- 1 258 119
- US-A- 3 334 958
- US-A- 4 436 392
- US-A- 4 436 393
- US-A- 4 741 613

## Beschreibung

Die Erfindung betrifft eine optische Anordnung nach dem Oberbegriff des Anspruchs 1 sowie deren Verwendung.

Durch die Ausbildung von einseitigen Rillenstrukturen, wie sie bei Fresnellinsen seit langem verwendet werden, können Linsen zur Verfügung gestellt werden, die bei flacher Bauweise und großer relativer Öffnung kurze Schnittweiten erreichen. Dabei ist die Dicke der Fresnellinsen über den Durchmesser nahezu konstant. Die Rillenstruktur wird durch eine Folge konzentrischer Wirkflanken gebildet, die die Abbildung bewirken. Zwischen den einzelnen Wirkflanken sind technisch bedingt Störflanken vorhanden, die zu unerwünschten Lichtverlusten führen und in der Abbildung eine entsprechende Ringstruktur erkennbar wird. Dies ist insbesondere der Fall, wenn das Licht auf die plane Fläche der Fresnellinse gerichtet wird.

Die ablenkende Wirkung kann dann nur soweit genutzt werden bis Totalreflexion an den Wirkflanken auftritt. In jedem Fall treten bei großen Ablenkungen des Lichts weitere Lichtverluste durch Oberflächenreflexionen nach den Fresnelschen Gleichungen auf, die auch zu einer teilweisen Polarisation des Lichtes führen.

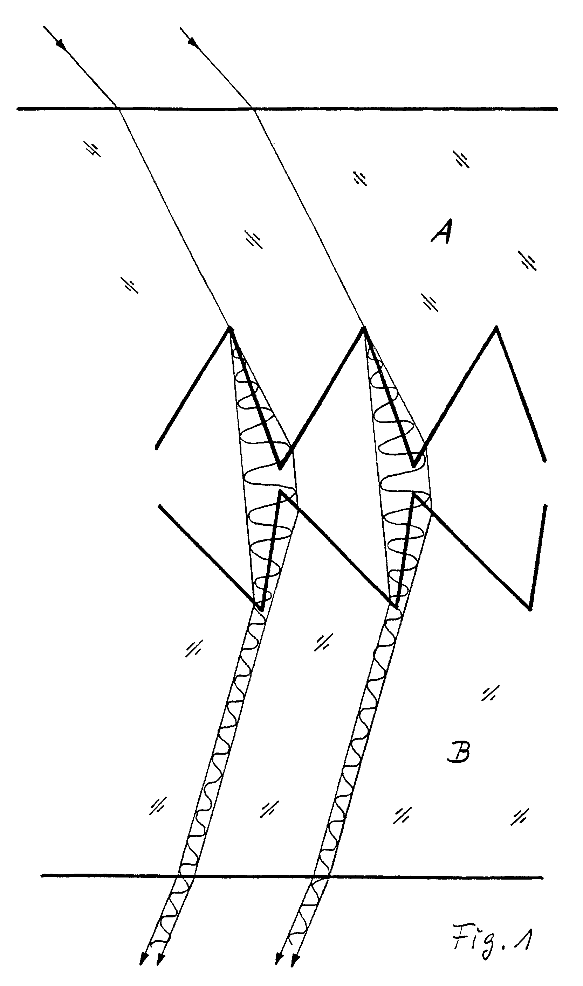

Bei Overhead-Projektoren werden so genannte aus zwei Fresnellinsen bestehende Fresnelkondensoren verwendet. Dabei stehen sich die Fresnellinsen mit ihren strukturierten Flächen gegenüber (vgl. Figur 1). Durch die im Vergleich zur freien Öffnung des Fresnelkondensors kurzen endlichen Bild- und Objektschnittweiten muß die Brechkraft auf zwei Linsen verteilt werden. Dabei verlaufen die Lichtstrahlen zwischen den beiden Fresnellinsen parallel zumindest jedoch nahezu parallel zur optischen Achse.

Für LCD-Projektoren wurde anfangs auf die für Overhead-Projektoren bekannte Lösung zurückgegriffen und am einfachsten das LCD-Panel auf einen solchen Projektor aufgelegt. Für gute bis optimale Projektionsbedingungen ist für eine gute Farbwiedergabe und hohen Kontrast ein nahezu senkrechter Lichteinfall über die gesamte zu projezierende Fläche eines solchen LCD-Displays erforderlich. Aus diesem Grund wurde das LCD mit einem Kondensorsystem nahezu senkrecht durchstrahlt. Das Kondensorsystem besteht aus einer Fresnellinse sowie einer nahe an der Lampe stehenden konventionellen Glas-Kondensorlinse. Im Anschluß an das LCD-Display wird eine zweite Fresnellinse als Feldlinse angeordnet, die die Lichtquelle in die Eintrittspupille des Projektionsobjektivs abbildet. Als Feldlinse wurde eine herkömmliche Fresnellinse verwendet, die die bereits erwähnten Lichtverluste bewirkt.

So ist in US 4,741,613 ein Overheadprojektor beschrieben, bei dem mit Hilfe von drei übereinander angeordneten Fresnellinsen die erforderliche Bauhöhe reduziert werden soll. Dabei wird das Licht einer Lichtquelle mit einem maximalen Winkel von ca. 60° divergent auf eine ebene Fläche einer Fresnellinse gerichtet, aus deren Wirkflanken das Licht in eine ebene Fläche einer zweiten Fresnellinse auftrifft und aus deren Wirkflächen auf Wirkflächen einer dritten Fresnellinse auftrifft, so daß das einseitig eingestrahlte Licht, auf der anderen Seite, des aus den drei Fresnellinsen gebildeten optischen Elementes an einer planen Endfläche austritt und auf eine Projetionslinse fokussiert.

Es ist daher Aufgabe der Erfindung eine optische Anornung unter Verwendung von Fresnellinsen vorzugeben, die verringerte Lichtverluste aufweist und auf einer Seite eine große Schnittweite ermöglicht.

Erfindungsgemäß wird diese Aufgabe mit den Merkmalen des Anspruchs 1 gelöst. Vorteilhafte Ausgestaltungen und Weiterbildungen der Erfindung ermöglichen die in den untergeordneten Ansprüchen genannten Merkmale.

Erfindungsgemäß wird eine aus zwei Linsen mit jeweils einseitig ausgebildeter Fresnelstruktur gebildete Anordnung verwendet, wobei die Fresnelstruktur der Linsen aufeinanderzu gerichtet ist. Dabei ist eine der beiden Fresnellinsen so ausgebildet und zur anderen ausgerichtet, daß das in bzw. aus ihren Wirkflanken ein- bzw.austretende Licht in einem zumindest nahezu rechten Winkel ein- oder austritt.

Zur weiteren Verringerung der Lichtverluste sollen die Störflanken dieser Fresnellinse mit den zugehörigen Wirkflanken einen Winkel von ca. 90° einschließen.

Bei der erfindungsgemäßen Anordnung ist es wesentlich, daß nur zwei der vier Flächen durch die das Licht ein- bzw. austritt einen signifikanten Beitrag zur Lichtablenkung leisten. Die Lichtstrahlen verlaufen nicht paralel zur optischen Achse.

Dadurch ist es überraschend möglich neben der Erhöhung der Lichtausbeute auch die Abbildung der Fresnellstruktur zu unterdrücken. Außerdem können der Streulichtanteil und Reflexionsverluste verringert werden. Je nach dem an welcher Seite der erfindungsgemäßen optischen Anordnung Licht eintritt kann eine nahezu unendliche Objekt- oder Bildschnittweite erreicht werden. Wird eine solche Anornung entsprechend dem herkömmlichen Fresnelkondensor in einem OverheadProjektor verwendet, wird eine nahezu unendliche Objektschnittweite erreicht, wenn nahezu paralleles Licht eingestrahlt wird.

Der Abstand der Fresnelstrukturen der erfindungsgemäßen Anordnung sollte so dicht als möglich sein, um eine kurze Baulänge zu erreichen und ggf. die Fresnellinsen miteinander zu verbinden, um so die Fresnelstrukturen vor Staub sowie mechanischen Beschädigungen zu schützen. Die Justierung der beiden Fresnellinsen zueinander ist nicht so kritisch wie bei einer herkömmlichen Overhead-Projektorlinse, da das Licht nahezu senkrecht in die Wirkflanken der zweiten Fresnellinse einfällt.

Wird die Erfindung für Overhead-Projektoren verwendet, ist es günstig die beiden Fresnellinsen leicht durchgebogen auszubilden oder in leicht durchgebogener Stellung zu halten bzw. anzuordnen, um die Gleichmäßigkeit der Bildfeldausleuchtung zu verbessern und die mechanische Stabilität zu erhöhen.

Außerdem können Lichtverluste durch Oberflächenreflexion durch die kleineren Einfallswinkel an den Flächen verringert werden. Dies kann weiter durch eine entspiegelnde Beschichtung verbessert werden, wobei hierfür herkömmliche Beschichtungen bzw. Schichtsysteme verwendet werden können oder andere reflexmindernde Verfahren zur Anwendung kommen.

In bestimmten Fällen kann es günstig sein die beiden Fresnellinsen aus verschiedenen Materialien, also mit verschiedenem Brechungsindex, herzustellen. In diesem Fall kann die Ablenkung des Lichtes zusätzlich neben den Winkeln in denen die Wirk- und Störflanken der einen Fresnellinse ausgebildet sind, beeinflußt werden. Dabei sind die Wirk- und Störflanken der Fresnellinse gemeint, die das Licht an den Wirkflanken auch ablenkt.

Durch die Aufteilung der Brechkräfte auf zwei Flächen kann die Begrenzung der maximalen Ablenkung durch Totalreflexion, wie sie nach dem Stand der Technik auftrat, vermieden werden, wenn das Licht der Lichtquelle auf eine Planfläche einer der beiden Fresnellinsen auftrifft.

Die erfindungsgemäße Anordnung kann gleichermaßen als Sammel- oder Zerstreuungslinse eingesetzt werden. Außerdem ist eine kombinierte Verwendung mit weiteren optischen Elementen, die im Strahlengang des Lichtes angeordnet werden können ohne weiteres möglich und es erschließen sich zusätzliche vielfältige Anwendungen entsprechend des jeweiligen optischen Elementes. Solche optischen Elemente können z.B. Prismen, Strahlteiler, Zylinderlinsen oder Lentikulare sein.

Günstigerweise kann eine weitere Fresnellinse als ein solches optisches Element verwendet werden, die parallel zu den beiden Fresnellinsen angeordnet werden kann.

Die Erfindung kann besonders vorteilhaft in Overhead-Projektoren, in LCD-Projektoren oder anderen Displays, wie z.B. Rückprojektoren, Videoprojektoren (CRT, LCD), Laser Display Projektoren, aber auch in Array-Anordnungen solcher Projektionssysteme (VIDEO-WALLS) verwendet werden, wobei die bekannten Nachteile weitestgehend vermieden werden.

Nachfolgend soll die Erfindung an einem Ausführungsbeispiel näher beschrieben und verdeutlicht werden.

Dabei zeigen:
- Figur 1: eine bekannte Anordnung zweier Fresnellinsen;
- Figur 2: ein Beispiel einer erfindungsgemäßen Anordnung und
- Figur 3: eine mit einer weiteren Fresnellinse ergänzte Anordnung nach Figur 2.

Bei der in Figur 1 gezeigten Anordnung zweier Fresnellinsen A und B in herkömmlicher Ausführung tritt Licht in die plane Fläche der Fresnellinse A ein und wird an ihren und den Wirkflanken der zweiten Fresnellinse und zusätzlich an der planen Fläche der zweiten Fresnellinse B, also in Summe viermal gebrochen. Die Führung des Lichtes zwischen den beiden Fresnelflächen erfolgt dabei nahezu parallel zur optischen Achse.

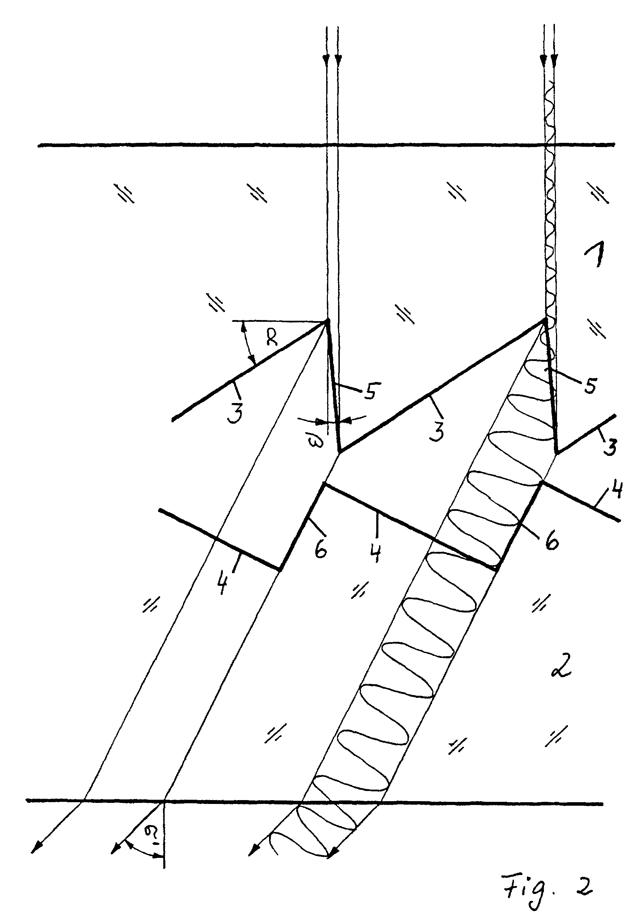

Im Gegensatz dazu werden bei der in der Figur 2 dargestellten erfindungsgemäßen Ausführung zwei verschiedene Fresnellinsen 1 und 2 verwendet, die bei diesem Beispiel aus Polymethylmethacrylat (PMMA) bestehen und einen Brechungsindex n= 1,493 haben.

Die Wirkflanken 3 und 4 der beiden Fresnellinsen 1 und 2 sind dabei so ausgebildet und angeordnet, daß das Licht in die Wirkflanken 4 zumindest nahezu orthogonal eintritt und demzufolge eine Ablenkung an diesen Flanken ausbleibt. Das Licht wird bei diesem Beispiel lediglich an der planen Fläche der zweiten Fresnellinse 2 und den Wirkflanken 3 der ersten Fresnellinse 1 abgelenkt.

Dabei trifft das Licht nahezu parallel auf die plane Fläche der ersten Fresnellinse 1. Die Wirkflanken 3 sind gegenüber der planen Fläche der Fresnellinse 1 um einen Winkel α = 37,7° geneigt. Die Störflanken 5 sind in einem Winkel von β = 3° gegenüber der optischen Achse geneigt, um eine Entformung der Linse zu ermöglichen.

In der Figur 2 wird ferner deutlich, daß die Wirk- und Störflanken 4 und 6 der zweiten Fresnellinse 2 orthogonal zueinander ausgerichtet sind und dadurch die bisher in Kauf genommenen Lichtverluste zumindest stark verringert werden können. Die Winkel für die Wirkflanke und Störflanke sind somit gleich Neigung der Strahlneigung und betragen 28,3 ° . Mit den angegebenen Winkeln ergibt sich eine Strahlablenkung von σ'= 45°.

Bei der in dieser Figur 2 gezeigten Ausführung und Lichtführung wird eine nahezu unendliche Objektschnittweite erreicht. Wird die Lichtführung im Gegensatz dazu umgekehrt, kann eine nahezu unendliche Bildschnittweite mit der gleichen Anordnung erreicht.

Das Beispiel kann in nicht dargestellter Form weiter verbessert werden, wenn eine zusätzliche herkömmliche Fresnellinse, mit ihrer Fresnelstruktur zur planen Fläche einer der beiden dargestellten Fresnellinse 1 oder 2 weisend, angeordnet wird.

Außerdem kann die Erfindung zur Beseitigung des von herkömmlichen Overhead-Projektoren bekannten "keystone"-Effektes eingesetzt werden.

Auf bekannte Art wird dies durch eine entsprechende Verschiebung des Projektionsobjektives seitlich zur optischen Achse - in Richtung der projezierten Fläche erreicht.

Das Beleuchtungssystem muß dabei so geändert werden, daß die Lichtquelle wieder in die Eintrittspupille des außerhalb der Achse (off axis) verwendeten Projektionsobjektivs abgebildet wird.

Bekannt sind hierfür mehrere Möglichkeiten, wie z.B. die Neigung des vollständigen Beleuchtungssystems, die seitliche Verschiebung der beiden Fresnellinsen zueinander oder die Verwendung zusätzlicher optischer Elemente.

Bei der einfachsten Lösung, der gegenseitigen Verschiebung der beiden Fresnellinsen, wird so vorgegangen, daß die der Lichtquelle zugewandte Fresnellinse ihre Position beibehält, während die andere Fresnellinse in Abhängigkeit vom zu korrigierenden "keystone"-Winkel und der dadurch notwendigen Verschiebung des Projektionsobjektivs ebenfalls seitlich und in Richtung des Projektionsobjektivs verschoben wird.

Es zeigt sich jedoch bei den bekannten Anordnungen gemäß Figur 1, daß ein Moire entsteht. Die Darstellung gemäß Figur 1 ist eine optimale Justierung der beiden Fresnellstrukturen. Nur dadurch ist es möglich, daß das Licht nahezu vollständig übertragen wird. Das an der ersten Fresnellinse A eintretende homogene Lichtbündel wird an der ersten Fresnelfläche in konzentrische helle und dunkle Lichtröhren zerlegt, wobei durch die Wirkflanken der zweiten Fresnellinse diese hellen, lichtführenden Bündel aufgenommen und wieder auseinandergezogen werden. Bei einem leichten Versatz der beiden Fresnelstrukturen ist es möglich, daß Licht auf die Störflanken der zweiten Fresnellinse fällt und damit für die Abbildung verloren geht.

Bei der erwähnten Verschiebung der Fresnellinsen zur Veränderung ihres Abstandes voneinander, ergeben sich zwangsläufig Bereiche, wo sich die Wirkflanken der ersten und zweiten Fresnellinse gegenüberstehen und das Licht vollständig übertragen wird sowie andere Bereiche in denen sich Wirkflanken der ersten Fresnellinse und Störflanken der zweiten Fresnellinse gegenüberstehen und da die Breite der hellen und dunklen Lichtröhren am Rand fast gleich groß sind, fast das gesamte Licht auf Störflanken fällt und verloren geht.

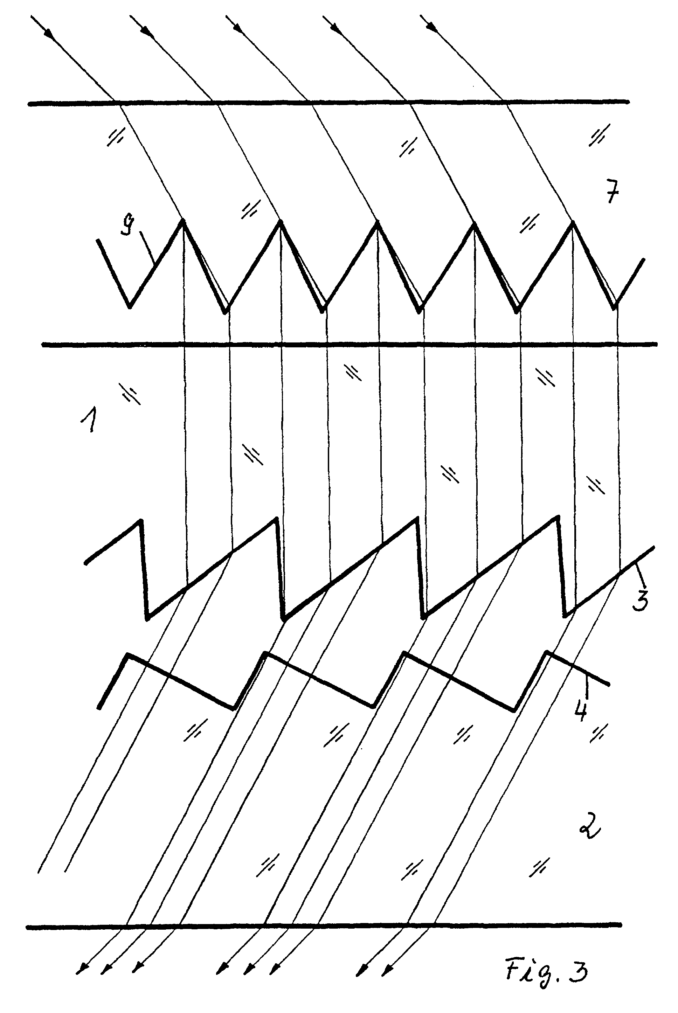

Wird nun diese Anordnung durch eine erfindungsgemäße Anordnung ergänzt (Figur 3), kann obwohl das Licht durch die erste Fresnellinse 7 stark strukturiert wird, dennoch das Licht nahezu vollständig übertragen und der Moire-Effekt deutlich verringert werden. Außerdem kann mit der Erfindung die Anforderung an die Justiergenauigkeit der einzelnen Linsen 1, 2 und 7 zueinander erheblich verringert werden.

Außerdem können weitere Maßnahmen, wie z.B. unterschiedliche Rillenbreiten der Fresnelstrukturen oder ein verkleinerter Abstand der ersten Fresnellinse 7 zu der Anordnung der beiden Fresnellinsen 1 und 2 genutzt werden, um die Sichtbarkeit der Rillenstrukturen bei der Abbildung weiter zu unterdrücken.

Das in Figur 3 dargestellte Beispiel einer erfindungsgemäßen Anordnung mit zwei Fresnellinsen 1 und 2, die mit einer weiteren Fresnellinse 7 ergänzt worden ist, macht deutlich, wie das auf die Fresnellinse 7 gerichtete Licht an ihrer planen Fläche und ihren Wirkflanken 9 abgelenkt und durch die plane Fläche der Fresnellinse 1 an deren Wirkflanken 3 erneut abgelenkt und nahezu orthogonal auf die Wirkflanken 4 der Fresnellinse 2 gerichtet und erneut beim Austritt aus der planen Fläche dieser Fresnellinse 2 abgelenkt wird.

Dabei sind die Wirkflanken 9 der Fresnellinse 7 kürzer als die Wirkflanken 3 der mittleren Fresnellinse 1 und außerdem steiler abgewinkelt.

## Patentansprüche

1. Optische Anordnung bestehend aus mindestens zwei Fresnellinsen, die jeweils einseitig strukturiert sind und die strukturierten Oberflächen zueinander weisend angeordnet sind,
**dadurch gekennzeichnet,**
**daß** die Wirkflanken (3), (4) der beiden Fresnellinsen (1, 2) so zueinander ausgerichtet sind, daß bei parallelem Lichteinfall oder Lichtaustritt in bzw. aus einer planen Fläche einer der beiden Fresnellinsen (1, 2) die Brechkräfte auf zwei Flächen aufgeteilt sind und eine Lichtablenkung lediglich an zwei der vier Flächen der beiden Fresnellinsen (1, 2) erfolgt.

2. Optische Anordnung nach Anspruch 1,
**dadurch gekennzeichnet, daß** die Wirkflanken (4) und die Störflanken (6) der einen Fresnellinse (2) einen Winkel von 50° einschließen.

3. Optische Anordnung nach Anspruch 1 oder 2,
**dadurch gekennzeichnet, daß** die Oberflächen der Fresnellinsen (1, 2) entspiegelt sind.

4. Optische Anordnung nach einem der Ansprüche 1 bis 3,
**dadurch gekennzeichnet, daß** die Brechzahlen der Materialien der Fresnellinsen (1, 2) unterschiedlich sind.

5. Optische Anordnung nach einem der Ansprüche 1 bis 4,
**dadurch gekennzeichnet, daß** zusätzliche optische Elemente im Strahlengang vor- oder nachgeschaltet angeordnet sind.

6. Optische Anordnung nach einem der Ansprüche 1 bis 5,
**dadurch gekennzeichnet, daß** eine zusätzliche Fresnellinse parallel zu den beiden Fresnellinsen (1, 2) angeordnet ist.

7. Optische Anordnung nach einem der Ansprüche 1 bis 6,
**dadurch gekennzeichnet, daß** die Fresnellinsen (1, 2) durchgebogen sind.

8. Verwendung einer optischen Anordnung nach einem der Ansprüche 1 bis 7 in einem Overhead-Projektor.

9. Verwendung einer optischen Anordnung nach einem der Ansprüche 1 bis 7 in einem LCD-Projektor.

10. Verwendung einer optischen Anordnung nach einem der Ansprüche 1 bis 7 in einem Display-, einem Datensichtprojektor oder einer Array-Anordnung von Projektionssystemen.

## Claims

1. Optical arrangement comprising at least two Fresnel lenses which are each structured on one side and the structured surfaces are arranged such that they point toward one another,
**characterized in that**
the active edges (3), (4) of the two Fresnel lenses (1, 2) are oriented with respect to one another in such a way that, in the event of parallel light incidence on, or light emergence from, a plane surface of one of the two Fresnel lenses (1, 2), the refractive powers are divided between two surfaces and light deflection is effected only at two of the four surfaces of the two Fresnel lenses (1, 2).

2. Optical arrangement according to Claim 1,
**characterized in that** the active edges (4) and the disturbing edges (6) of one Fresnel lens (2) form an angle of 90°.

3. Optical arrangement according to Claim 1 or 2,
**characterized in that** the surfaces of the Fresnel lenses (1, 2) are antireflection-coated.

4. Optical arrangement according to one of Claims 1 to 3,
**characterized in that** the refractive indices of the materials of the Fresnel lenses (1, 2) are different.

5. Optical arrangement according to one of Claims 1 to 4,
**characterized in that** additional optical elements are arranged upstream or downstream in the beam path.

6. Optical arrangement according to one of Claims 1 to 5,
**characterized in that** an additional Fresnel lens is arranged parallel to the two Fresnel lenses (1, 2).

7. Optical arrangement according to one of Claims 1 to 6,
**characterized in that** the Fresnel lenses (1, 2) are bent.

8. Use of an optical arrangement according to one of Claims 1 to 7 in an overhead projector.

9. Use of an optical arrangement according to one of Claims 1 to 7 in an LCD projector.

10. Use of an optical arrangement according to one of Claims 1 to 7 in a display projector, a visual display projector or an array arrangement of projection systems.

## Revendications

1. Système optique composé d'au moins deux lentilles de Fresnel qui sont respectivement structurées unilatéralement et qui sont disposées pour présenter les surfaces structurées l'une vers l'autre, **caractérisé en ce que** les flancs actifs (3), (4) des deux lentilles de Fresnel (1, 2) sont orientés l'un par rapport à l'autre de façon telle que, en cas d'incidence ou de sortie de lumière parallèle dans ou depuis une surface plane d'une des deux lentilles de Fresnel (1, 2), les pouvoirs convergents sont séparés sur deux surfaces et il se produit une déflexion de lumière uniquement au niveau de deux des quatre surfaces des deux lentilles de Fresnel (1, 2).

2. Système optique selon la revendication 1, **caractérisé en ce que** les flancs actifs (4) et les flancs d'interférence (6) d'une lentille de Fresnel (2) forment un angle de 90°.

3. Système optique selon la revendication 1 ou 2, **caractérisé en ce que** les surfaces des lentilles de Fresnel (1, 2) sont antireflet.

4. Système optique selon l'une des revendications 1 à 3, **caractérisé en ce que** les indices de réfraction des matériaux des lentilles de Fresnel (1, 2) sont différents.

5. Système optique selon l'une des revendications 1 à 4, **caractérisé en ce que** des éléments optiques supplémentaires sont intercalés avant ou après sur le trajet du faisceau.

6. Système optique selon l'une des revendications 1 à 5, **caractérisé en ce qu'**une lentille de Fresnel supplémentaire est disposée parallèlement aux deux lentilles de Fresnel (1, 2).

7. Système optique selon l'une des revendications 1 à 6, **caractérisé en ce que** les lentilles de Fresnel (1, 2) sont fléchies.

8. Utilisation d'un système optique selon l'une des revendications 1 à 7 dans un rétroprojecteur.

9. Utilisation d'un système optique selon l'une des revendications 1 à 7 dans un projecteur à cristaux liquides.

10. Utilisation d'un système optique selon l'une des revendications 1 à 7 dans un projecteur d'affichage, dans un projecteur d'affichage de données ou dans une disposition en groupe de systèmes de projection.
